# FASCICULE DE BREVET EUROPEEN

(11) **EP 2 078 449 B1**
(45) Date de publication et mention de la délivrance du brevet: **05.10.2016**
(21) Numéro de dépôt: 08306027.7
(22) Date de dépôt: 31.12.2008
(51) Int. Cl.: F16J 3/04, A01B 71/08

(54) **Dispositif de protection d'une liaison d'articulation et dispositif de transmission comprenant un tel dispositif de protection**
Schutzvorrichtung einer Gelenkverbindung und Übertragungsvorrichtung, die eine solche Schutzvorrichtung umfasst
Device for protecting a connection link and transmission device comprising such a protection device

(30) Priorité: 08.01.2008 FR 0800080
(43) Date de publication de la demande: 15.07.2009
(73) Titulaire: SPM, 49400 Distre (FR)
(72) Inventeur: Guetre, Jean-Marie, 49400 Marson (FR)
(74) Mandataire: Laget, Jean-Loup

(56) Documents cités:
- EP-A- 0 061 320
- EP-A- 0 908 083
- FR-A- 1 357 007
- JP-A- 11 253 007
- NL-A- 251 938
- US-A- 5 027 665

## Description

La présente invention concerne de manière générale la protection de liaison d'articulation entre un arbre menant et un arbre mené.

L'invention concerne plus particulièrement un dispositif de protection d'une liaison d'articulation entre un arbre menant d'un engin, par exemple un arbre de transmission d'un tracteur, et un arbre mené, par exemple un arbre mené d'un outil tracté, ledit dispositif de protection présentant un corps de forme générale tubulaire formé à une extrémité par une manchette de fixation apte à être solidarisée à une partie d'un logement de l'arbre menant, et à l'extrémité opposée par une manchette de masquage laissée libre et apte à venir à recouvrement de la liaison d'articulation. L'invention concerne également un dispositif de transmission comprenant un tel dispositif de protection et l'application d'un tel dispositif de protection à une liaison d'articulation.

On connaît de l'état de la technique et notamment du document DE 196 29998C1 un dispositif de protection de liaison d'articulation tel que décrit ci-dessus. Le document DE 196 29 998 C1 divulgue une coiffe de protection de joint de cardan, de forme tubulaire, qui est montée à coulissement le long de l'arbre menant. Ladite coiffe peut ainsi être déplacée en position de découvrement de la liaison d'articulation par coulissement dans le sens d'un écartement de la coiffe et de la liaison d'articulation pour par exemple la graisser ou la nettoyer. Ladite coiffe de protection est ensuite rappelée en position de recouvrement du joint de la liaison d'articulation par un ressort pour protéger l'utilisateur lors de la rotation des deux arbres.

Cependant, une telle conception de la coiffe de protection et du dispositif de transmission nécessite d'ajouter des pièces mécaniques supplémentaires articulées telles qu'un ressort et des organes de coulissement de la coiffe par rapport à l'arbre menant. Les pièces mécaniques autorisant le coulissement de la coiffe et le rappel en position de recouvrement de la coiffe sont soumises aux agressions extérieures, telles que l'eau, la terre et la poussière, ce qui risque de détériorer lesdites pièces mécaniques. Le risque de panne ou de dysfonctionnement d'un tel appareil est alors important. L'ajout de pièces mécaniques augmente également le coût du dispositif de protection.

En outre, du fait de la vitesse de rotation importante des arbres et de leur angle de débattement, la coiffe subit des chocs et des efforts de frottement importants qui provoquent rapidement une dégradation de la coiffe de protection. La coiffe de protection finit par casser laissant la liaison d'articulation à nu. L'utilisateur n'est alors plus protégé vis-à-vis de la liaison d'articulation puisque seule la manchette de fixation du dispositif de protection reste solidarisée au logement de l'arbre menant. Le remplacement de la coiffe de protection s'avère compliqué.

Le document NL 251 938 A divulgue un autre dispositif de protection d'une articulation de liaison présentant un corps de forme générale tubulaire sans ressort, dans lequel la manchette de masquage est suffisamment souple pour autoriser un retournement partiel sur seulement une partie du pourtour extérieur de la zone restante du corps.

Le document US 5 027 665 A1 décrit également un tel dispositif de protection sans ressort dans lequel, dans un mode particulier de réalisation illustré sur les figures 5 et 6, un retournement par rabat de la manchette de masquage est prévu pendant le montage sur l'articulation, ladite manchette étant fixée à ses deux extrémités.

La présente invention a pour but de proposer un dispositif de protection pour liaison d'articulation entre deux arbres, dont la dégradation à l'usage est limitée et qui ne casse pas.

L'invention a également pour but de proposer un dispositif de protection qui permet de découvrir la liaison d'articulation sans nécessiter de pièces mécaniques articulées. L'invention a également pour but de limiter le nombre de pièces que comporte le dispositif de protection, en vue de réduire son coût. Un autre but de l'invention est de proposer un dispositif de protection pour liaison d'articulation qui soit aisément remplaçable, notamment pour permettre l'enfilage d'un tel dispositif sur la manchette de fixation restante d'un dispositif de protection cassé de l'état de la technique.

Un autre but de l'invention est de permettre, à l'état de repos de la liaison d'articulation, un graissage et un nettoyage aisés de ladite liaison d'articulation, tout en offrant, à l'état de rotation de la liaison d'articulation, une protection suffisante vis-à-vis de l'utilisateur.

A cet effet, l'invention concerne un dispositif de protection d'une liaison d'articulation entre un arbre menant d'un engin, par exemple un arbre de transmission d'un tracteur, et un arbre mené, par exemple un arbre mené d'un outil tracté, ledit dispositif de protection présentant un corps de forme générale tubulaire formé à une extrémité par une manchette de fixation apte à être solidarisée à une partie d'un logement de l'arbre menant, et à l'extrémité opposée par une manchette de masquage laissée libre et apte à venir à recouvrement de la liaison d'articulation, caractérisé en ce qu'au moins une zone du corps du dispositif de protection est en matériau élastiquement déformable à mémoire de forme, de manière à permettre une déformation dudit corps entre une position dite de sécurité dans laquelle la manchette de masquage vient à recouvrement de la liaison d'articulation et une position dite d'accès dans laquelle la zone en matériau à mémoire de forme est déformée élastiquement pour découvrir au moins partiellement la liaison d'articulation, sans altération dudit matériau, l'extrémité libre de la manchette de masquage étant, dans la position dite d'accès, retournée au moins partiellement par rabat sur le pourtour extérieur de la zone restante du corps tubulaire.

La réalisation d'au moins une zone du corps du dispositif de protection en matériau élastiquement déformable à mémoire de forme permet de découvrir la liaison d'articulation sans nécessiter de pièces mécaniques intermédiaires articulées. L'utilisation d'un tel matériau permet de limiter le risque de cassure ou de dégradation du dispositif de protection. En outre, grâce à un tel matériau le dispositif de protection peut aisément et rapidement reprendre sa place autour de la liaison d'articulation.

En outre, lorsque la manchette de fixation est en matériau élastiquement déformable, un tel dispositif de protection pour liaison d'articulation est aisément remplaçable et peut même être très avantageusement monté sur la manchette de fixation restante d'un dispositif de protection cassé de l'état de la technique.

Grâce à la manchette de masquage laissée libre et à ladite zone élastiquement déformable à mémoire de forme, le graissage, le nettoyage ou la réparation de la liaison d'articulation sont aisés, tout en offrant, à l'état de rotation de la liaison d'articulation, une protection suffisante vis-à-vis de l'utilisateur.

La manchette de masquage est avantageusement, dans la position dite d'accès, retournée complètement, telle une chaussette, par rabat sur le pourtour extérieur de la zone restante du corps tubulaire, de manière en particulier à dégager complètement la liaison d'articulation préalablement recouverte.

Selon une caractéristique avantageuse de l'invention, ledit corps est formé d'une seule pièce.

La réalisation du corps dispositif de protection en une seule pièce simplifie sa mise en place autour de la liaison d'articulation. Sa fabrication en est simplifiée et donc son coût réduit.

Selon une caractéristique avantageuse de l'invention, le corps dudit dispositif comporte également une portion, s'étendant entre les deux manchettes, qui est formée de plis, ou spires, souples, de type soufflet.

Une telle portion plissée permet de découvrir aisément la liaison d'articulation en comprimant les plis. Les plis reprennent ensuite naturellement leur forme d'origine pour permettre de recouvrement de la liaison d'articulation.

En outre, le retournement de la manchette de masquage s'effectue par rabat sur le pourtour extérieur de la portion plissée, de telle sorte que ladite manchette puisse se maintenir en place d'elle-même (c'est-à-dire sans nécessiter l'utilisation d'outil de maintien), permettant à l'utilisateur d'intervenir facilement sur l'articulation.

Selon une caractéristique avantageuse de l'invention, le dispositif de protection comporte un anneau dit anti-rotation, de préférence disposé au niveau de la manchette de fixation, et destiné à être relié à une chaîne ou un câble solidaire du châssis de l'engin équipé de l'arbre menant, pour l'immobilisation en rotation du dispositif de protection par rapport audit engin.

Selon une caractéristique avantageuse de l'invention, l'anneau anti-rotation est en un matériau de rigidité supérieure au matériau du corps du dispositif de protection, ledit anneau étant, de préférence, noyé dans le matériau de la manchette de fixation.

Selon une caractéristique avantageuse de l'invention, il est prévu également un collier de serrage pour le serrage de la manchette de fixation sur ladite partie du logement de l'arbre menant, le collier de serrage étant de préférence en un matériau de rigidité supérieure au matériau du corps du dispositif de protection et étant noyé dans le matériau de la manchette de fixation.

Selon une caractéristique avantageuse de l'invention, ledit matériau élastiquement déformable à mémoire de forme est un matériau polymère dont la valeur de dureté est choisie dans la plage : [40 Shore A - 70 Shore A], et, de préférence, dans la plage [45 Shore A - 60 Shore A].

On observe qu'au-delà d'une valeur de 70 Shore A, le corps du dispositif de protection est trop rigide et ne permet pas de découvrir aisément la liaison d'articulation. A l'inverse, en dessous d'une valeur de 40 Shore A, le corps du dispositif de protection risque de s'affaisser sur la liaison d'articulation.

Selon une caractéristique avantageuse de l'invention, le corps tubulaire dudit dispositif est un matériau composite et la face intérieure dudit corps est formée par une toile résistante au déchirement, telle qu'une toile aramide (par exemple en Kevlar®).

L'invention concerne également l'application d'un dispositif de protection tel que décrit ci-dessus à une liaison d'articulation, tel qu'un joint de cardan, entre un arbre menant, ou de transmission, d'un engin, tel qu'un tracteur, et un arbre mené d'un outil, par exemple un outil tracté de type agricole.

L'invention sera bien comprise à la lecture de la description suivante d'exemples de réalisation, en référence aux dessins annexés dans lesquels :
- la figure 1 est une vue en coupe axiale du dispositif de protection selon l'invention en position de recouvrement d'une liaison d'articulation entre un arbre menant et un arbre mené ;
- la figure 2 est une vue du dispositif de protection de la figure 1 en position de découvrement de la liaison d'articulation ;
- la figure 3 est une vue de côté schématique du dispositif de protection selon l'invention en position dite de sécurité, et
- la figure 4 est une vue de côté schématique du dispositif de protection selon la figure 3 en position dite d'accès, par retournement à partir de la position de la figure 3.

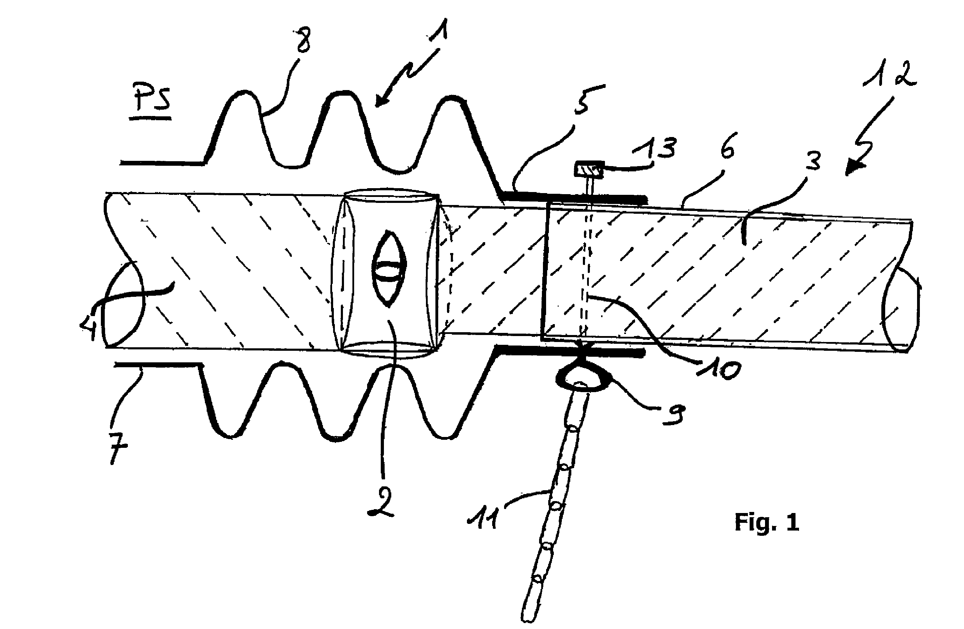

En référence aux figures 1 à 4, le dispositif 12 de transmission, par exemple un tracteur, comporte un arbre 3 menant ou de transmission, monté libre à rotation dans un logement 6 dudit dispositif de transmission et équipé d'une liaison 2 d'articulation, tel qu'un joint de cardan. La liaison d'articulation 2 permet l'articulation et la transmission de couple entre l'arbre menant 3 et un arbre 4 mené, par exemple un arbre mené d'un outil tracté de type agricole. L'arbre 3 menant est généralement appelé prise de force et sert à l'entraînement d'appareils agricoles et analogues.

Le dispositif 12 de transmission comporte également un dispositif 1 de protection de ladite liaison 2 d'articulation. Le dispositif 1 de protection présente un corps de forme générale tubulaire formé à une extrémité par une manchette 5 de fixation solidarisable à une partie dudit logement 6 de l'arbre 3 de transmission et à l'extrémité opposée par une manchette 7 de masquage laissée libre et apte à venir à recouvrement de la liaison d'articulation 2.

Ici on entend par manchette une portion tubulaire, de préférence droite et non plissée. En variante, on peut prévoir que la manchette de masquage soit plissée.

De manière caractéristique à l'invention, au moins une zone du corps du dispositif 1 de protection est en matériau élastiquement déformable à mémoire de forme, de manière à permettre une déformation dudit corps entre une position PS dite de sécurité dans laquelle la manchette 7 de masquage vient à recouvrement de la liaison d'articulation 2 et une position PA dite d'accès dans laquelle la zone en matériau à mémoire de forme est déformée élastiquement pour découvrir au moins partiellement la liaison d'articulation 2, sans altération dudit matériau. Le dispositif de protection peut ainsi passer rapidement de la position PA à PS et inversement.

Le corps dudit dispositif 1 comporte également une portion 8, s'étendant entre les deux manchettes 5, 7, qui est formée de plis transversaux, ou spires, souples de type soufflet. Dans l'exemple illustré à la figure 1, la série de plis est de forme sinusoïdale en coupe axiale. De préférence, ledit corps est formé d'une seule pièce.

Préférentiellement, la portion 8 s'étend autour de la liaison d'articulation 2 pour s'assurer de la tenue du corps du dispositif de protection autour de ladite liaison d'articulation 2.

Ledit matériau élastiquement déformable à mémoire de forme est un matériau polymère, de préférence thermoplastique, ici à base de PVC ou de silicone, dont la valeur de dureté Shore est choisie dans la plage : [40 Shore A - 70 Shore A], et, de préférence, dans la plage s'effectue [45 Shore A - 60 Shore A] lorsqu'il s'agit de PVC ou dans la plage [40 Shore A - 50 Shore A] lorsqu'il s'agit de silicone. Dans les exemples illustrés aux figures, la dureté du matériau à base de PVC est de 55 Shore A et celle du matériau à base de silicone de 45 Shore A. Le matériau est ainsi suffisamment rigide pour conférer une tenue suffisante au dispositif de protection pour éviter qu'il ne s'affaisse, sous l'effet de son propre poids, sur les pièces mobiles, notamment sur la liaison d'articulation des deux arbres. Au-delà de 70 Shore A, le matériau n'est plus suffisamment souple pour permettre le retournement de la manchette libre, et en dessous de 40 Shore A, le corps du dispositif de protection risque de s'affaisser sur la liaison d'articulation.

De préférence, l'ensemble du corps du dispositif de protection est réalisé dans le même matériau élastiquement déformable à mémoire de forme. On peut cependant envisager que différentes parties du corps tubulaire du dispositif, telles que la partie plissée et la manchette 7 de masquage présentent chacune une souplesse (ou dureté) distincte de celle des autres parties, pourvu qu'au moins une zone de la portion plissée ou de la manchette de masquage soit élastiquement déformable, à mémoire de forme, de manière à permettre le découvrement et le recouvrement de la liaison d'articulation, pour un accès aisé pour l'utilisateur.

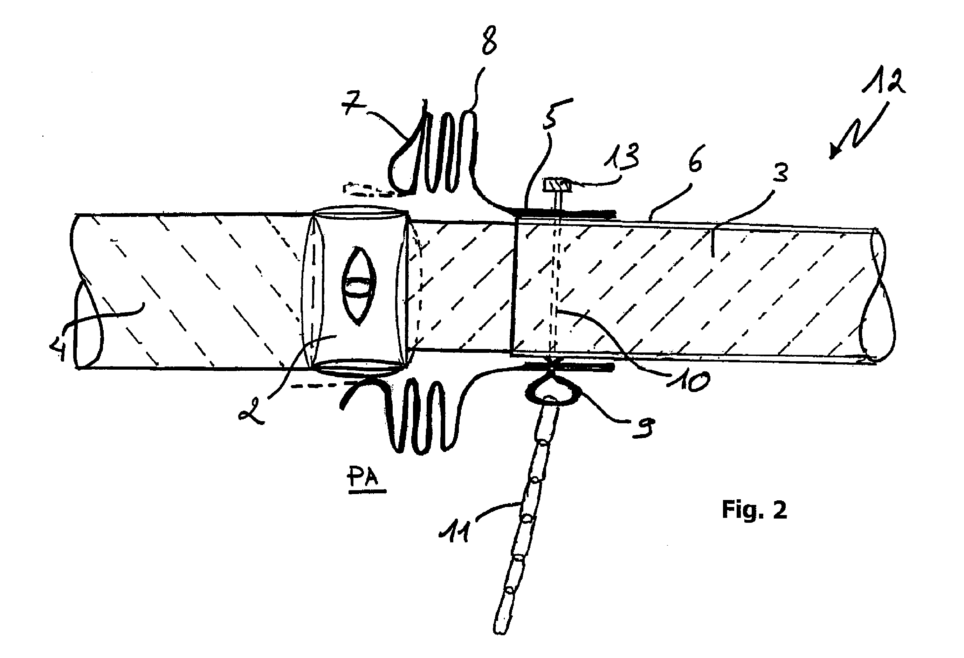

En position d'accès à la liaison d'articulation et comme illustré à la figue 2 une partie de la manchette 7 peut être pliée contre les plis de la portion 8. En variante, comme illustré en pointillés à la figure 2, la manchette de masquage est de préférence suffisamment souple pour autoriser son retournement au moins partiel pour accéder au joint de cardan.

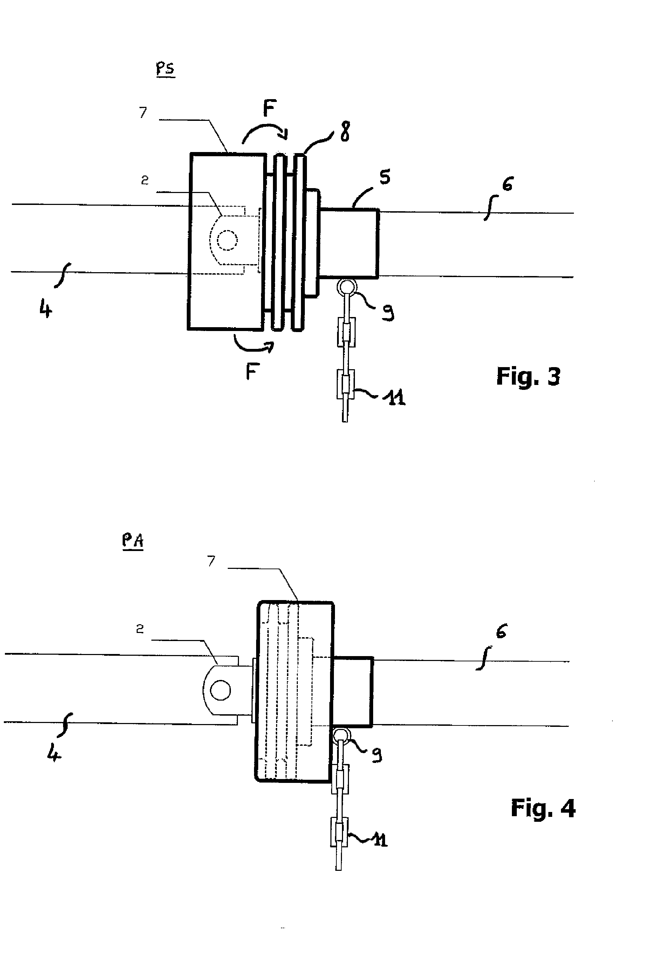

Selon l'invention, comme schématisé à la figure 4, le retournement total de la manchette 7 de masquage à partir de sa position de sécurité PS schématisée à la figure 3 s'effectue par rabat, suivant la flèche F, sur le pourtour extérieur de la portion plissée, de telle sorte que ladite manchette puisse rester en place d'elle-même (c'est-à-dire sans nécessiter l'utilisation d'outil de maintien), permettant à l'utilisateur d'intervenir facilement sur l'articulation, notamment pour en effectuer son entretien (réparation, nettoyage ou graissage). Cette position d'accès PA de la figure 4 dégage complètement la liaison d'articulation et laisse les deux mains libres à l'opérateur pour effectuer ses interventions sur cette dernière.

Après l'intervention, le dispositif de protection peut aisément et rapidement reprendre sa place autour de la liaison d'articulation, pour revenir en position de sécurité PS.

De préférence, le corps tubulaire dudit dispositif est en matériau composite, la face intérieure dudit corps étant formée par une toile résistante au déchirement, telle qu'une toile aramide.

Ce corps tubulaire est de préférence réalisé selon un procédé appelé roto-moulage. Ladite toile est positionnée sur une matrice montée à rotation sur un axe et l'ensemble matrice-toile est trempé dans un bain du précurseur du polymère (PVC ou silicone) à l'état liquide. Ce matériau vient imprégner et recouvrir au moins la face extérieure de la toile, et est ensuite polymérisé par cuisson. La face interne du corps tubulaire peut également être ensuite enduite, de PVC ou de silicone, pour protéger la toile aramide.

L'épaisseur finale du matériau constitutif du corps dudit dispositif 1 de protection est avantageusement comprise entre 1, 5 et 3 mm et de préférence entre 2 et 3 mm.

Le dispositif 1 de protection comporte un anneau 9 dit anti-rotation, de préférence disposé au niveau de la manchette 5 de fixation, et destiné à être relié à une chaîne 11 solidaire du châssis de l'engin équipé de l'arbre 3 menant, pour l'immobilisation en rotation du dispositif 1 de protection par rapport audit engin. L'anneau 9 anti-rotation est en un matériau de rigidité supérieure au matériau du corps du dispositif de protection. Ledit anneau est, de préférence, noyé dans le matériau de la manchette 5 de fixation.

Le dispositif 1 de protection comporte, comme visible sur les figures 1 et 2, également un collier de serrage 10 pour le serrage de la manchette 5 de fixation sur ladite partie du logement 6 de l'arbre menant 3. En particulier, le collier de serrage maintient la manchette de fixation serrée sur le logement 6 par une vis 13. Le collier de serrage 10 est de préférence en un matériau de rigidité supérieure au matériau du corps du dispositif de protection et avantageusement noyé dans le matériau de la manchette 5 de fixation. De préférence les boucles formées par l'anneau 9 anti-rotation et le collier de serrage 10 s'interpénètrent de manière à conférer à l'anneau 9 anti-rotation une bonne résistance aux sollicitations exercées par la chaîne 11.

## Revendications

1. Dispositif (1) de protection d'une liaison d'articulation (2) entre un arbre menant (3) d'un engin, par exemple un arbre de transmission d'un tracteur, et un arbre mené (4), par exemple un arbre mené d'un outil tracté, ledit dispositif (1) de protection présentant un corps de forme générale tubulaire formé à une extrémité par une manchette (5) de fixation apte à être solidarisée à une partie d'un logement (6) de l'arbre (3) menant, et à l'extrémité opposée par une manchette (7) de masquage laissée libre et apte à venir à recouvrement de la liaison d'articulation (2),
**caractérisé en ce qu'**au moins une zone du corps du dispositif (1) de protection est en matériau élastiquement déformable à mémoire de forme, de manière à permettre une déformation dudit corps entre une position (PS) dite de sécurité dans laquelle la manchette (7) de masquage vient à recouvrement de la liaison d'articulation (2) et une position (PA) dite d'accès dans laquelle la zone en matériau à mémoire de forme est déformée élastiquement pour découvrir au moins partiellement la liaison d'articulation (2), sans altération dudit matériau, l'extrémité libre de la manchette (7) de masquage étant, dans la position dite d'accès, retournée au moins partiellement par rabat sur le pourtour extérieur de la zone restante du corps tubulaire.

2. Dispositif (1) selon la revendication 1, **caractérisé en ce que** la manchette de masquage est, dans la position dite d'accès, retournée complètement, par rabat sur le pourtour extérieur de la zone restante du corps tubulaire, de manière à dégager complètement la liaison d'articulation préalablement recouverte.

3. Dispositif (1) selon l'une des revendications précédentes, **caractérisé en ce que** ledit corps est formé d'une seule pièce.

4. Dispositif (1) selon l'une des revendications précédentes, **caractérisé en ce que** le corps dudit dispositif (1) comporte également une portion (8), s'étendant entre les deux manchettes (5, 7), qui est formée de plis, ou spires, souples de type soufflet.

5. Dispositif (1) selon l'une des revendications précédentes, **caractérisé en ce que** le dispositif (1) de protection comporte un anneau (9) dit anti-rotation, de préférence disposé au niveau de la manchette (5) de fixation, et destiné à être relié à une chaîne ou un câble (11) solidaire du châssis de l'engin équipé de l'arbre (3) menant, pour l'immobilisation en rotation du dispositif (1) de protection par rapport audit engin.

6. Dispositif (1) selon la revendication 5, **caractérisé en ce que** l'anneau (9) anti-rotation est en un matériau de rigidité supérieure au matériau du corps du dispositif de protection, ledit anneau étant, de préférence, noyé dans le matériau de la manchette (5) de fixation.

7. Dispositif (1) selon l'une des revendications précédentes, **caractérisé en ce qu'**il comporte également un collier de serrage (10) pour le serrage de la manchette (5) de fixation sur ladite partie du logement (6) de l'arbre menant (3), le collier de serrage (10) étant de préférence en un matériau de rigidité supérieure au matériau du corps du dispositif de protection et étant noyé dans le matériau de la manchette (5) de fixation.

8. Dispositif (1) selon l'une des revendications précédentes, **caractérisé en ce que** ledit matériau élastiquement déformable à mémoire de forme est un matériau polymère dont la valeur de dureté est choisie dans la plage : [40 Shore A - 70 Shore A].

9. Dispositif (1) selon l'une des revendications précédentes, **caractérisé en ce que** le corps tubulaire dudit dispositif est un matériau composite et la face intérieure dudit corps est formée par une toile résistante au déchirement, telle qu'une toile aramide.

10. Dispositif (12) de transmission comportant, d'une part, un arbre (3) menant, ou de transmission, monté libre à rotation dans un logement (6) dudit dispositif de transmission et équipé d'une liaison (2) d'articulation, tel qu'un joint de cardan, avec un arbre (4) mené et, d'autre part, un dispositif (1) de protection de ladite liaison (2) d'articulation, ledit dispositif (1) de protection présentant un corps de forme générale tubulaire formé à une extrémité par une manchette (5) de fixation solidarisable à une partie dudit logement (6) de l'arbre (3) de transmission et à l'extrémité opposée par une manchette (7) de masquage laissée libre et apte à venir à recouvrement de la liaison d'articulation (2), **caractérisé en ce que** le dispositif (1) de protection est conforme à l'une des revendications précédentes.

11. Application d'un dispositif de protection conforme à l'une des revendications 1 à 9 à une liaison (2) d'articulation, tel qu'un joint de cardan, entre un arbre menant (3), ou de transmission, d'un engin, tel qu'un tracteur, et un arbre mené (4) d'un outil, par exemple un outil tracté de type agricole.

## Patentansprüche

1. Schutzvorrichtung (1) einer Gelenkverbindung (2) zwischen einer führenden Welle (3) eines Fahrzeugs, beispielsweise einer Übertragungswelle eines Traktors, und einer geführten Welle (4), beispielsweise einer geführten Welle eines gezogenen Werkzeugs, wobei die Schutzvorrichtung (1) einen allgemein rohrförmigen Körper aufweist, der an einem Ende von einer Befestigungsmanschette (5) gebildet ist, die imstande ist, mit einem Teil einer Aufnahme (6) der führenden Welle (3) fest verbunden zu sein, und am entgegengesetzten Ende von einer freigelassenen Abdeckungsmanschette (7), die imstande ist, die Gelenkverbindung (2) zu bedecken,
**dadurch gekennzeichnet, dass** mindestens eine Zone des Körpers der Schutzvorrichtung (1) aus einem elastisch verformbaren Material mit Form-Memory ist, um eine Verformung des Körpers zwischen einer Sicherheitsposition (PS), in welcher die Abdeckmanschette (7) die Gelenkverbindung (2) bedeckt, und einer Zugriffsposition (PA), in welcher die Zone aus Material mit Form-Memory elastisch verformt wird, um die Gelenkverbindung (2) mindestens teilweise freizulegen, ohne Beeinträchtigung des Materials, zu erlauben, wobei das freie Ende der Abdeckmanschette (7) in der Zugriffsposition auf dem äußeren Umfang der restlichen Zone des rohrförmigen Körpers mindestens teilweise durch Umschlag umgedreht ist.

2. Vorrichtung (1) nach Anspruch 1, **dadurch gekennzeichnet, dass** die Abdeckmanschette imstande ist, durch Umschlag auf dem äußeren Umfang der restlichen Zone des rohrförmigen Körpers vollständig umgedreht zu sein, um die zuvor bedeckte Gelenkverbindung vollständig freizulegen.

3. Vorrichtung (1) nach einem der vorangehenden Ansprüche, **dadurch gekennzeichnet, dass** der Körper aus einem einzigen Teil gebildet ist.

4. Vorrichtung (1) nach einem der vorangehenden Ansprüche, **dadurch gekennzeichnet, dass** der Körper der Vorrichtung (1) ebenfalls einen Abschnitt (8) aufweist, der sich zwischen den zwei Manschetten (5, 7) erstreckt, der von elastischen Falten oder Wellungen in der Art eines Balgs gebildet ist.

5. Vorrichtung (1) nach einem der vorangehenden Ansprüche, **dadurch gekennzeichnet, dass** die Schutzvorrichtung (1) einen Anti-Rotationsring (9) aufweist, der vorzugsweise im Bereich der Befestigungsmanschette (5) angeordnet ist und bestimmt ist, mit einer Kette oder einem Kabel (11) verbunden zu sein, die/das mit dem Fahrgestell des Fahrzeugs, das mit der führenden Welle (3) ausgestattet ist, fest verbunden ist, um die Rotation der Schutzvorrichtung (1) in Bezug zum Fahrzeug zu blockieren.

6. Vorrichtung (1) nach Anspruch 5, **dadurch gekennzeichnet, dass** der Anti-Rotationsring (9) aus einem Material mit einer höheren Steifigkeit als das Material des Körpers der Schutzvorrichtung ist, wobei der Ring vorzugsweise in das Material der Befestigungsmanschette (5) eingelassen ist.

7. Vorrichtung (1) nach einem der vorangehenden Ansprüche, **dadurch gekennzeichnet, dass** sie ebenfalls einen Spannring (10) für das Spannen der Befestigungsmanschette (5) auf dem Teil der Aufnahme (6) der führenden Welle (3) aufweist, wobei der Spannring (10) vorzugsweise aus einem Material mit einer höheren Steifigkeit als das Material des Körpers der Schutzvorrichtung ist und in das Material der Befestigungsmanschette (5) eingelassen ist.

8. Vorrichtung (1) nach einem der vorangehenden Ansprüche, **dadurch gekennzeichnet, dass** das elastisch verformbare Material mit Form-Memory ein Polymermaterial ist, dessen Härtewert aus dem Bereich [40 Shore A - 70 Shore A] ausgewählt ist.

9. Vorrichtung (1) nach einem der vorangehenden Ansprüche, **dadurch gekennzeichnet, dass** der rohrförmige Körper der Vorrichtung ein Verbundmaterial ist und die Innenseite des Körpers von einem reißfesten Stoff wie ein Aramidstoff gebildet ist.

10. Übertragungsvorrichtung (12), aufweisend zum einen eine führende Welle (3) oder Übertragungswelle, die in einer Aufnahme (6) der Übertragungsvorrichtung frei drehend montiert ist und mit einer Gelenkverbindung (2) wie ein Kardangelenk mit einer geführten Welle (4) ausgestattet ist und zum anderen eine Schutzvorrichtung (1) der Gelenkverbindung (2), wobei die Schutzvorrichtung (1) einen allgemein rohrförmigen Körper aufweist, der an einem Ende von einer Befestigungsmanschette (5) gebildet ist, die mit einem Teil einer Aufnahme (6) der Übertragungswelle (3) fest verbindbar ist, und am entgegengesetzten Ende von einer freigelassenen Abdeckungsmanschette (7), die imstande ist, die Gelenkverbindung (2) zu bedecken,
**dadurch gekennzeichnet, dass** die Schutzvorrichtung (1) einem der vorangehenden Ansprüche entspricht.

11. Anwendung einer Schutzvorrichtung nach einem der Ansprüche 1 bis 9 auf eine Gelenkverbindung (2) wie ein Kardangelenk zwischen einer führenden Welle (3) oder einer Übertragungswelle zwischen einem Fahrzeug wie ein Traktor und einer geführten Welle (4) eines Werkzeugs, beispielsweise ein gezogenes Werkzeug vom Landwirtschaftstyp.

## Claims

1. A device (1) for protecting an articulation link (2) between a driving shaft (3) of a vehicle, for example a transmission shaft of a tractor, and a driven shaft (4), for example a driven shaft of a pulled tool, said protection device (1) having a generally tubular body formed at one end by a fastening sleeve (5) able to be secured to a part of a housing (6) of the driving shaft (3), and at the opposite end by a concealing sleeve (7) left free and able to overlap the articulation link (2),
**characterized in that** at least one zone of the body of the protection device (1) is made from an elastically deformable shape memory material, so as to allow a deformation of said body between a so-called security position (PS) in which the concealing sleeve (7) overlaps the articulation link (2) and a so-called access position (PA) in which the zone made from shape memory material is elastically deformed to at least partially expose the articulation link (2), without altering said material, the free end of the concealing sleeve (7) being, in the so-called access position, turned over at least partially by a flap on the outer perimeter of the remaining zone of the tubular body.

2. The device (1) according to claim 1, **characterized in that** the concealing sleeve is, in the so-called access position, completely turned over, by a flap on the outer perimeter of the remaining zone of the tubular body, so as to completely free the articulation link previously covered.

3. The device (1) according to one of the preceding claims, **characterized in that** said body is formed in a single piece.

4. The device (1) according to one of the preceding claims, **characterized in that** the body of said device (1) also includes a portion (8), extending between the two sleeves (5, 7), which is formed by flexible folds, or turns, of the baffle type.

5. The device (1) according to one of the preceding claims, **characterized in that** the protection device (1) includes a so-called anti-rotation ring (9), preferably arranged at the fastening sleeve (5), and intended to be connected to a chain or a cable (11) secured to the chassis of the vehicle equipped with the driving shaft (3), to immobilize the rotation of the protection device (1) relative to said vehicle.

6. The device (1) according to claim 5, **characterized in that** the anti-rotation ring (9) is made from a material with a rigidity higher than the material of the body of the protection device, said ring preferably being embedded in the material of the fastening sleeve (5).

7. The device (1) according to one of the preceding claims, **characterized in that** it also includes a gripping collar (10) to grip the fastening sleeve (5) on said part of the housing (6) of the driving shaft (3), the gripping collar (10) preferably being made from a material with a rigidity greater than the material of the body of the protection device and being embedded in the material of the fastening sleeve (5).

8. The device (1) according to one of the preceding claims, **characterized in that** said elastically deformable shape memory material is a polymer material having a hardness value chosen in the range: [40 Shore A - 70 Shore A].

9. The device (1) according to one of the preceding claims, **characterized in that** the tubular body of said device is made from a composite material and the inner face of said body is formed by a tear-resistant cloth, such as an aramid cloth.

10. A transmission device (12) including, on the one hand, a driving or transmission shaft (3), mounted freely rotating in a housing (6) of said transmission device and equipped with an articulation link (2), such as a universal joint, with a driven shaft (4), and on the other hand, a protection device (1) for said articulation link (2), said protection device (1) having a generally tubular body formed at one end by a fastening sleeve (5) that can be secured to a part of said housing (6) of the transmission shaft (3) and at the opposite end by a concealing sleeve (7) left free and able to overlap the articulation link (2), **characterized in that** the protection device (1) is according to one of the preceding claims.

11. An application of a protection device according to one of claims 1 to 9 to an articulation link (2), such as a universal joint, between a driving or transmission shaft (3) of a vehicle, such as a tractor, and a driven shaft (4) of a tool, for example a pulled tool of the agricultural type.
